# EUROPEAN PATENT SPECIFICATION

(11) **EP 4 117 261 B1**
(45) Date of publication and mention of the grant of the patent: **29.07.2026**
(21) Application number: 21803094.8
(22) Date of filing: 12.04.2021
(51) Int. Cl.: H04M 1/02, H04M 1/72469, H04M 1/60

(54) **METHOD FOR PERFORMING CALL FUNCTION AND ELECTRONIC DEVICE THEREFOR**
VERFAHREN ZUR DURCHFÜHRUNG EINER ANRUFFUNKTION UND ELEKTRONISCHE VORRICHTUNG DAFÜR
PROCÉDÉ DE RÉALISATION DE FONCTION D'APPEL ET DISPOSITIF ÉLECTRONIQUE ASSOCIÉ

(30) Priority: 13.05.2020 KR 20200057330
(43) Date of publication of application: 11.01.2023
(73) Proprietor: Samsung Electronics Co., Ltd., Gyeonggi-do 16677 (KR)
(72) Inventor: KIM, Byeongcheol, Suwon-si Gyeonggi-do 16677 (KR); SEO, Jooho, Suwon-si Gyeonggi-do 16677 (KR); LEE, Sungho, Suwon-si Gyeonggi-do 16677 (KR); LEE, Junwon, Suwon-si Gyeonggi-do 16677 (KR); KANG, Donghee, Suwon-si Gyeonggi-do 16677 (KR); CHOI, Jongchul, Suwon-si Gyeonggi-do 16677 (KR); HEO, Changryong, Suwon-si Gyeonggi-do 16677 (KR)
(74) Representative: Gulde & Partner
(86) International application number: PCT/KR2021/004539
(87) International publication number: WO 2021/230504

(56) References cited:
- KR-A- 20150 053 650
- KR-A- 20170 060 519
- KR-A- 20190 089 374
- KR-A- 20190 098 340
- KR-A- 20190 101 184
- US-A1- 2010 167 791

## Description

### Technical Field

Various embodiments disclosed in the disclosure relate to a method for performing a call function and an electronic device therefor.

### Background Art

Technologies for increasing a display surface of a mobile device have been developed. To enhance a display size at the same time as strengthening the portability of the mobile device, a flexible display may be used. The flexible display may be implemented as various types of displays such as a bendable display, a foldable display, and a rollable display.

Meanwhile, as the shape of the mobile device varies, it may be possible for a user to use a different type of mobile device depending on a type of content provided by the mobile device or a scheme provided by the mobile device. For example, the user may expand and use the display of the mobile device, when watching a movie, and may retract the expanded display again to use the display in a default shape, when receiving a call while watching the movie.

US 2010/167791 A1, KR 2019 0098340 A and US 2019/261519 A1 disclose conventional electronic devices and methods that provide an alternative solution to allow a user to decide if a flexible display should be retracted when receiving a call.

### Disclosure

### Technical Problem

When including a rollable display, an electronic device may provide various pieces of content by means of a display which extends left and right and/or up and down and is relatively wide. The electronic device may perform a call function as the same time as providing content. For example, while the electronic device provides image content by means of a display extending left and right, it may receive a call from an external electronic device.

At this time, it may be difficult for a user to holding the electronic device in the state where the display extends with his or her one hand to make a call. Thus, to make a call in a normal call mode, the user should suffer the hassle of retracting the display and executing the phone function. For another example, the user should further enter an additional input to make a call in a speaker mode and/or a video call mode.

### Technical Solution

The invention is defined by the appended set of claims. The description that follows is subjected to this limitation. Any disclosure lying outside the scope of said claims is only intended for illustrative as well as comparative purposes.

### Advantageous Effects

According to various embodiments disclosed in the disclosure, a function considering the convenience of a user according to a change in the shape of the electronic device may be provided.

According to various embodiments disclosed in the disclosure, the electronic device may provide a user interface or a graphic user interface (GUI) supporting various call shapes based on a shape which is operating.

According to various embodiments disclosed in the disclosure, the electronic device may identify an expanding and/or retracting state of the flexible display and may receive a user input to change a shape of the flexible display or switch a call mode.

The electronic device may provide a user interface corresponding to the change in shape to strengthen the usability of a call function and may assign a sense of unity to the user input and the change in the shape of the electronic device to provide an intuitive user interface. In detail, the call mode may change to a receiver mode, a speaker mode, and/or a video call mode in response to the change in the shape of the electronic device to provide the user with the convenience of the call function.

In addition, various effects ascertained directly or indirectly through the disclosure may be provided.

### Description of Drawings

FIG. 1 is a block diagram illustrating an electronic device in a network environment according to various embodiments;
FIG. 2 is a block diagram illustrating the display device according to various embodiments;
FIG. 3 illustrates a block diagram of an electronic device, according to various embodiments;
FIG. 4 illustrates an electronic device which varies in shape, according to various embodiments;
FIG. 5 illustrates an electronic device which varies in shape, according to various embodiments;
FIG. 6A illustrates an electronic device for providing a user interface, according to various embodiments;
FIG. 6B illustrates an electronic device for providing a user interface, according to various embodiments;
FIG. 7 illustrates an electronic device for ending a call function and providing a text function, according to various embodiments;
FIG. 8A illustrates an electronic device for providing a user interface while executing a call function, according to various embodiments;
FIG. 8B illustrates an electronic device for providing a user interface while executing a call function, according to various embodiments;
FIG. 8C illustrates an electronic device for providing a user interface while executing a call function, according to various embodiments;
FIG. 8D illustrates an electronic device for providing a user interface while executing a call function, according to various embodiments;
FIG. 9 is a drawing for describing the definition of a touch, according to various embodiments;
FIG. 10 illustrates an operational flowchart of an electronic device, according to various embodiments; and
FIG. 11 illustrates an operational flowchart of an electronic device, according to various embodiments.

With regard to description of drawings, the same or similar denotations may be used for the same or similar components.

### Mode for Invention

Hereinafter, various embodiments of the disclosure may be described with reference to accompanying drawings.

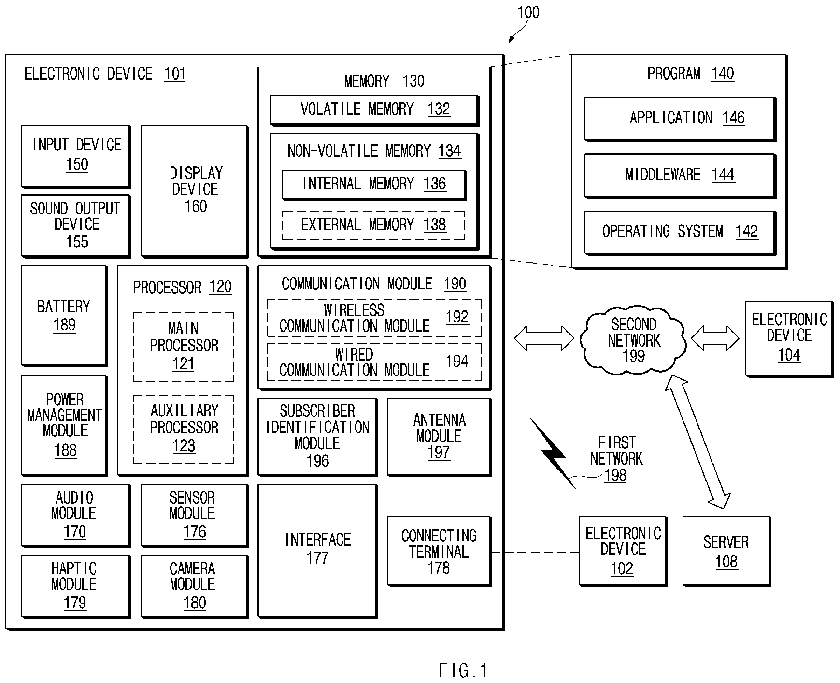

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module(SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, a keyboard, or a digital pen (e.g., a stylus pen).

The sound output device 155 may output sound signals to the outside of the electronic device 101. The sound output device 155 may include, for example, a speaker or a receiver. The speaker may be used for general purposes, such as playing multimedia or playing record, and the receiver may be used for an incoming call. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., PCB). According to an embodiment, the antenna module 197 may include a plurality of antennas. In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program #40) including one or more instructions that are stored in a storage medium (e.g., internal memory #36 or external memory #38) that is readable by a machine (e.g., the electronic device #01). For example, a processor (e.g., the processor #20) of the machine (e.g., the electronic device #01) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

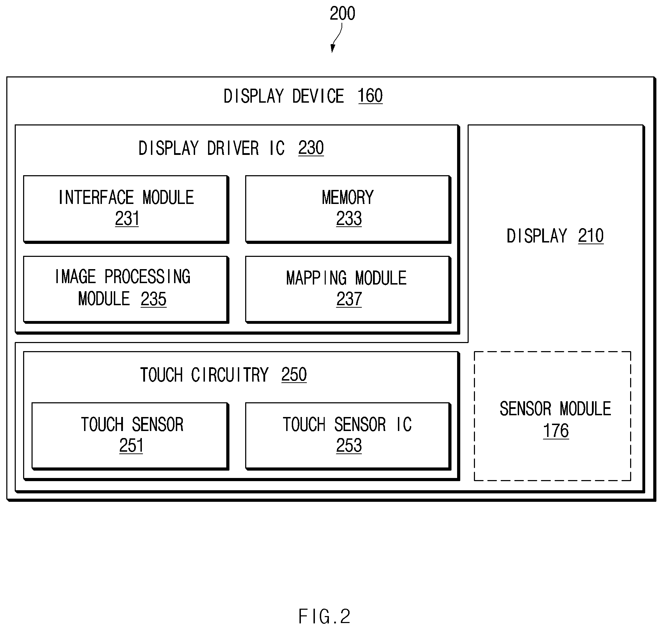

FIG. 2 is a block diagram 200 illustrating the display device 160 according to various embodiments. Referring to FIG. 2, the display device 160 may include a display 210 and a display driver integrated circuit (DDI) 230 to control the display 210. The DDI 230 may include an interface module 231, memory 233 (e.g., buffer memory), an image processing module 235, or a mapping module 237. The DDI 230 may receive image information that contains image data or an image control signal corresponding to a command to control the image data from another component of the electronic device 101 via the interface module 231. For example, according to an embodiment, the image information may be received from the processor 120 (e.g., the main processor 121 (e.g., an application processor)) or the auxiliary processor 123 (e.g., a graphics processing unit) operated independently from the function of the main processor 121. The DDI 230 may communicate, for example, with touch circuitry 150 or the sensor module 176 via the interface module 231. The DDI 230 may also store at least part of the received image information in the memory 233, for example, on a frame by frame basis. The image processing module 235 may perform pre-processing or post-processing (e.g., adjustment of resolution, brightness, or size) with respect to at least part of the image data. According to an embodiment, the pre-processing or post-processing may be performed, for example, based at least in part on one or more characteristics of the image data or one or more characteristics of the display 210. The mapping module 237 may generate a voltage value or a current value corresponding to the image data pre-processed or post-processed by the image processing module 235. According to an embodiment, the generating of the voltage value or current value may be performed, for example, based at least in part on one or more attributes of the pixels (e.g., an array, such as an RGB stripe or a pentile structure, of the pixels, or the size of each subpixel). At least some pixels of the display 210 may be driven, for example, based at least in part on the voltage value or the current value such that visual information (e.g., a text, an image, or an icon) corresponding to the image data may be displayed via the display 210.

According to an embodiment, the display device 160 may further include the touch circuitry 250. The touch circuitry 250 may include a touch sensor 251 and a touch sensor IC 253 to control the touch sensor 251. The touch sensor IC 253 may control the touch sensor 251 to sense a touch input or a hovering input with respect to a certain position on the display 210. To achieve this, for example, the touch sensor 251 may detect (e.g., measure) a change in a signal (e.g., a voltage, a quantity of light, a resistance, or a quantity of one or more electric charges) corresponding to the certain position on the display 210. The touch circuitry 250 may provide input information (e.g., a position, an area, a pressure, or a time) indicative of the touch input or the hovering input detected via the touch sensor 251 to the processor 120. According to an embodiment, at least part (e.g., the touch sensor IC 253) of the touch circuitry 250 may be formed as part of the display 210 or the DDI 230, or as part of another component (e.g., the auxiliary processor 123) disposed outside the display device 160.

According to an embodiment, the display device 160 may further include at least one sensor (e.g., a fingerprint sensor, an iris sensor, a pressure sensor, or an illuminance sensor) of the sensor module 176 or a control circuit for the at least one sensor. In such a case, the at least one sensor or the control circuit for the at least one sensor may be embedded in one portion of a component (e.g., the display 210, the DDI 230, or the touch circuitry 150)) of the display device 160. For example, when the sensor module 176 embedded in the display device 160 includes a biometric sensor (e.g., a fingerprint sensor), the biometric sensor may obtain biometric information (e.g., a fingerprint image) corresponding to a touch input received via a portion of the display 210. As another example, when the sensor module 176 embedded in the display device 160 includes a pressure sensor, the pressure sensor may obtain pressure information corresponding to a touch input received via a partial or whole area of the display 210. According to an embodiment, the touch sensor 251 or the sensor module 176 may be disposed between pixels in a pixel layer of the display 210, or over or under the pixel layer.

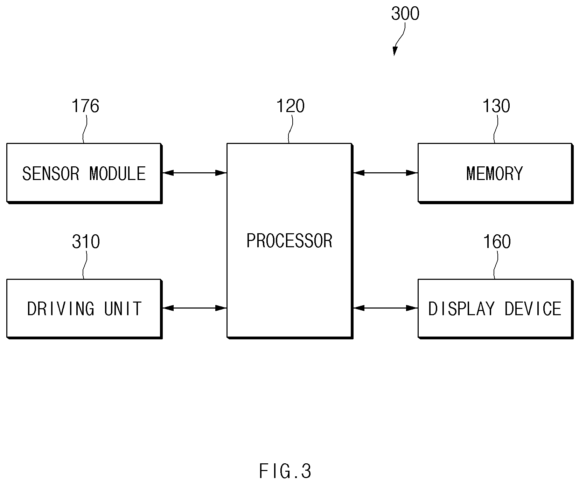

FIG. 3 illustrates a block diagram 300 of an electronic device, according to various embodiments.

Referring to FIG. 3, an electronic device (e.g., an electronic device 101 of FIG. 1) may include a processor 120, a memory 130, a display device 160, a sensor module 176, and/or a driving unit 310. Unless described differently, a description of components having the same reference numerals as those in FIG. 1 may refer to the description of FIG. 1.

The processor 120 may be operatively connected with other component(s) (e.g., the memory 130, the display device 160, the sensor module 176, and/or the driving unit 310) in the electronic device. The processor 120 may control the components of the electronic device. For example, the processor 120 may control the components of the electronic device 101 depending on at least one or more instructions stored in the memory 130.

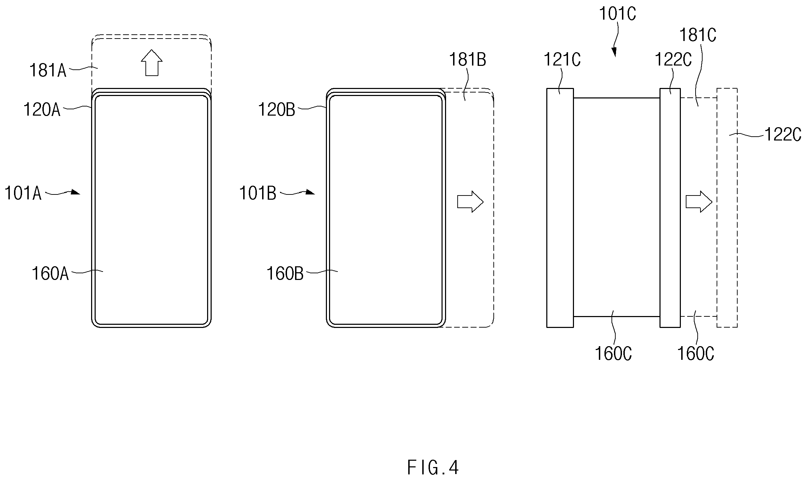

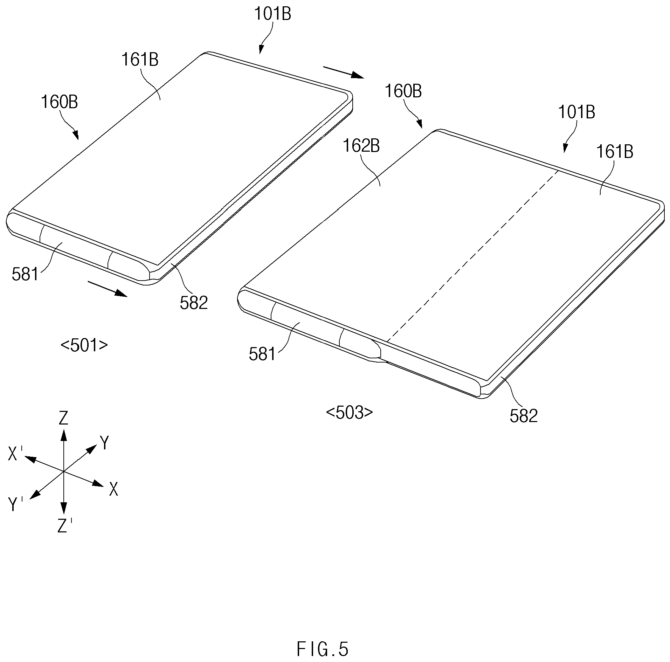

The display device 160 may output various pieces of information processed by the electronic device 101 to be provided to a user. For example, the display device 160 may display a first user interface and/or a second user interface associated with a call function on a display (e.g., a display 210 of FIG. 2). The display device 160 may include various types of displays (e.g., the display 210 of FIG. 2). The display may include a flexible display. The flexible display may be a display, at least a portion of which has flexibility. The flexible display may be connected with the driving unit 310. The flexible display may refer to a rollable display which is rolled into an edge of one side of the electronic device 101 or which is unrolled from the edge of the one side. For example, as the user manipulates the electronic device 101 to vary a shape of the electronic device 101, at least a portion of the flexible display may be rolled into an edge of one side of the electronic device 101 or may be unrolled from the edge of the one side. For another example, when a specified external input (e.g., a swipe touch input corresponding to a specified direction) is detected in at least one area of the flexible display, the processor 120 may transmit a control signal to the driving unit 310. The driving unit 310 may drive at least a portion of the flexible display to be rolled into an edge of one side of the electronic device 101 or be unrolled from the edge of the one side in response to the received control signal. A description will be given in detail of a change in the shape of the flexible display based on the specified external input with reference to FIGS. 4 and 5 below.

The display device 160 may further include at least one sensor (e.g., a fingerprint sensor, an iris sensor, a pressure sensor, and/or an illumination sensor) of the sensor module 176 and/or a control circuit thereof. In this case, the at least one sensor and/or the control circuit thereof may be embedded in a part (e.g., a display 210 of FIG. 2, a display driver IC 230 of FIG. 2, and/or a touch circuit 250 of FIG. 2) of the display device 160.

For example, the flexible display may slide out (i.e. the flexible display may extend) in a first direction or may slide in (i.e. the flexible display may retract) in a second direction which is a direction opposite to the first direction, based on the operation of the driving unit 310. The processor 120 may control the shape of the flexible display to be changed based on the external input (e.g., the touch input of the user) detected on the display device 160. When the electronic device 101 receives a specified input (e.g., a swipe touch input in the second direction on the first user interface) from the outside (e.g., a user), the processor 120 may control the driving unit 310 to slide the flexible display in and/or out in a specified direction.

According to an embodiment, the electronic device 101 may identify a shape of the flexible display using at least one sensor (e.g., the sensor module 176 of FIG. 1). For example, the electronic device 101 may identify information associated with a shape of the flexible display, a direction in which one surface of the electronic device 101 faces, and/or an orientation of the electronic device 101 using at least one of an acceleration sensor, a gyro sensor, a switch (e.g., a contact switch), or a magnetic sensor (e.g., a hall sensor) in the electronic device 101. The electronic device 101 may be configured to display different user interfaces based on the information associated with the shape of the flexible display, the information associated with the direction in which the one surface of the electronic device 101 faces, and/or the information associated with the orientation of the electronic device 101. The shape of the flexible display may include an expanded mode (e.g., a state where the flexible display slides out (i.e. extends) in the first direction) and/or a normal mode (e.g., a state where the flexible display slides in (i.e. retracts) in the second direction). When the electronic device 101 attempts to make a call with an external electronic device, the processor 120 may control to identify the shape of the flexible display using at least one sensor included in the electronic device 101, in response to executing a call reception function or a call transmission function. When identifying the shape of the flexible display as the expanded mode, the processor 120 may display a first user interface associated with the call on at least one area of the flexible display.

According to an embodiment, the electronic device 101 may obtain pressure information associated with a touch input on a portion and/or all of the flexible display using the at least one sensor (e.g., the sensor module 176 of FIG. 1). The at least one sensor included in the sensor module 176 may be a pressure sensor and may be embedded in at least a part of the display device 160. For example, the touch input may include at least one of a swipe touch input corresponding to the first direction and/or the second direction, a single touch, a double touch, a multi-touch, a pressure input, a long touch input, or a double tap input.

The driving unit 310 may change the shape of the flexible display. For example, when a specified external input (e.g., a swipe touch input to the first user interface) is detected on at least one area of the flexible display, the processor 120 may control such that at least a portion of the flexible display is rolled into an edge of one side of the electronic device or is unrolled from the edge of the one side, using the driving unit 310. The change in the shape of the electronic device using the driving unit 310 will be described in detail with reference to FIGS. 4 and 5.

According to an embodiment, a display area visually exposed in a front surface of the electronic device may vary in size depending on a change in the shape of the electronic device. The display may be divided into a first display area and a second display area. The division of the first display area and the second display area may be the logical division of the display area. The electronic device may operate in various modes depending on a change in shape. The electronic device may be configured to display a user interface based on the size of the display area visually exposed to the front surface. For example, when the display area has a maximum size, the electronic device may provide a user with a user interface such that at least one area of the display is rolled into an edge of one side of the electronic device in response to an external input (e.g., a touch input of the user). For another example, when the display area has a minimum size, the electronic device may provide the user with a user interface such that at least one area of the display is unrolled from the edge of the one side of the electronic device in response to an external input (e.g., a touch input of the user). According to the change in the shape of the electronic device, the electronic device may provide intuitive usability to the user by displaying different user interfaces based on the size of the display area.

According to an embodiment, the electronic device may provide different user interfaces depending on a state of the electronic device with respect to the same function. For example, the electronic device may provide different user interfaces in a first state (e.g., an opened, unrolled, unfolded, extending, or expanding state) and a second state (e.g., a closed, rolled, folded, or retracting state). The first state of the electronic device may be referred to as a normal mode, and the second state may be referred to as an expanded mode. For example, the normal mode may refer to a state where the flexible display included in the electronic device slides in (i.e. retracts) in a specified direction (e.g., the second direction) from a housing. For example, the expanded mode may refer to a state where the flexible display included in the electronic device slides out (i.e. extends) in a specified direction (e.g., the first direction) from the housing.

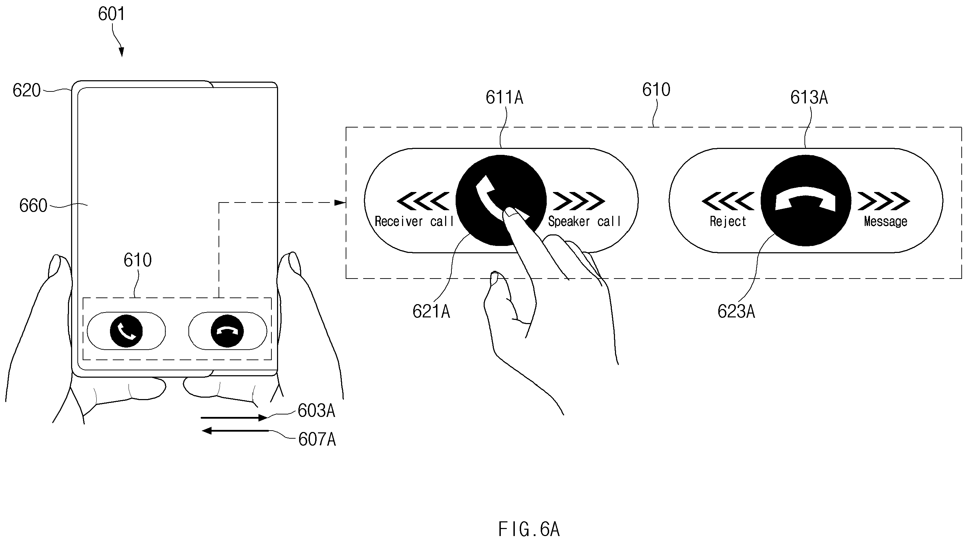

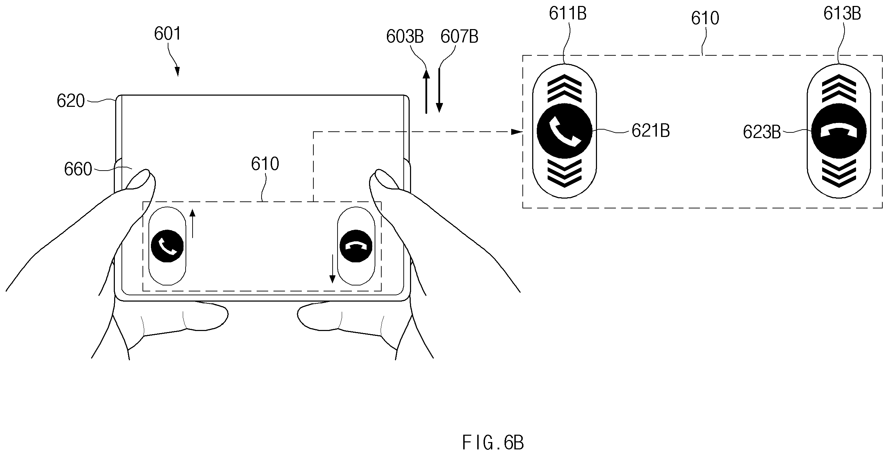

According to an embodiment, the processor 120 may identify a shape of the flexible display in response to an operation where the electronic device attempts to perform a call function with an external electronic device. When identifying the shape of the flexible display as the first state (e.g., the expanded mode) using the at least one sensor included in the sensor module 176, the processor 120 may display a first user interface (e.g., a first user interface 611A of FIG. 6A or a third user interface 611B of FIG. 6B) and/or a second user interface (e.g., a second user interface 613A of FIG. 6A or a fourth user interface 613B of FIG. 6B), which are associated with the call, on at least one area of the flexible display.

According to an embodiment, the first user interface may include a user interface corresponding to executing the call function. When the swipe touch input corresponding to the first direction is detected on the first user interface, the processor 120 may set a call mode of the electronic device to a speaker mode and/or a video call mode to execute the call function. When the swipe touch input corresponding to the second direction is detected on the first user interface, the processor 120 may control the flexible display to slide in (i.e. retracts) in the second direction using the driving unit 310. For example, the second direction may correspond to a direction opposite to the first direction. When the flexible display slides in (i.e. retracts) in the second direction, the processor 120 may set the call mode of the electronic device to a receiver mode and may control the call function to be executed. In the state where the call function is executed in the receiver mode, the processor 120 may continue displaying the first user interface on the one region of the flexible display. In the state where the call function is executed in the receiver mode, when the swipe touch input corresponding to the second direction is detected on the first user interface, the processor 120 may control the flexible display to slide out (i.e. extends) again in the first direction using the driving unit 310. The first user interface may determine the call mode set to switch when a specified input is detected as one of the speaker mode or the video call mode, in response to a single touch input. For example, the processor 120 may be configured to switch the call mode of the electronic device to the speaker mode, when the swipe touch input corresponding to the first direction is detected on the first user interface, and switch the call mode of the electronic device to the video call mode, when the swipe touch input corresponding to the first direction is detected after a single touch input is detected once on the first user interface.

According to an embodiment, the second user interface may include a user interface corresponding to ending the call function. When the swipe touch input corresponding to the first direction is detected on the second user interface, the processor 120 may end the call between the electronic device and the external electronic device and may control to execute a function for transmitting a message to the external electronic device. For example, the function for transmitting the message may include at least one of a short message service (SMS), a multimedia message service (MMS), or an instant messenger service. When the swipe touch input corresponding to the second direction is detected on the second user interface, the processor 120 may end the call between the electronic device and the external electronic device and may continue executing the operation which is being previously executed. The second user interface may determine the call mode set to switch when a specified input is detected as one of the speaker mode or the video call mode, in response to a single touch input. For example, the processor 120 may be configured to execute an instant messenger service function, when the swipe touch input corresponding to the first direction is detected on the second user interface, and execute an MMS function, when the swipe touch input corresponding to the first direction is detected after a single touch input is detected once on the second user interface. The first user interface and the second user interface, which are described above, will be described in detail with reference to FIGS. 6A and 6B.

The input detected on the first user interface and the second user interface is described as the swipe input and/or the single touch input in FIG. 3, but the above description is illustrative. Embodiments of the disclosure are not limited thereto. For example, the input detected on the user interface may include at least one of a swipe touch input, a single touch, a double touch, a multi-touch, a pressure input, a long touch input, or a double tap input. The user may specify a touch input allowing the electronic device to execute a specified function.

The configuration of the electronic device illustrated in FIG. 3 is illustrative, and embodiments of the disclosure are not limited thereto. For example, the electronic device may fail to include at least one of the components illustrated in FIG. 4. For another example, the electronic device 101 may further include a component which is not illustrated in FIG. 3.

FIG. 4 illustrates electronic devices 101A, 101B, and 101C which vary in shape, according to various embodiments.

According to various embodiments, the shape of the electronic device may be physically changed according to the expanding/retracting of a housing of the electronic device. For example, the electronic device may include a housing, at least a portion of which may be expanded and/or a flexible display (e.g., a display device 160 of FIG. 1), at least a portion of which may be expanded and/or retracted. For example, as a part of the electronic device slides out or is rolled, the electronic device may be expanded or extended (e.g., opened) or retracted (e.g., closed). The extending part refers to a portion or area corresponding to a difference between a first shape and a second shape, when the shape of the electronic device changes from the first shape to the second shape, which is not limited to a specific structure.

According to an embodiment, a first electronic device 101A (e.g., an electronic device 101 of FIG. 1) may include an extending part 181A which is expanded and/or retracted up and down. For example, at least a part of a housing 120A of the first electronic device 101A may include the extending part 181A capable of being expanded to an upper side of the first electronic device 101A. For example, the extending part 181A may be a part of the housing 120A, which may expand the housing 120A of the first electronic device 101A by moving the other of the housing 120A to a relatively upper side. The extending part 181A may move independently of a display 160A (e.g., the display device 160 of FIG. 1). For example, the extending part 181A may protrude to a relatively upper side than the display 160A. For another example, the extending part 181A may protrude to a relatively lower side than the display 160A. According to an embodiment, the extending part 181A may include a camera module. For example, the camera module may be configured to rotate along the movement of the extending part 181A.

According to an embodiment, a second electronic device 101B (e.g., the electronic device 101 of FIG. 1) may include an extending part 181B which is expanded and/or retracted left and right. For example, at least a part of a housing 120B of the second electronic device 101B may include the extending part 181B capable of being expanded in a right direction of the second electronic device 101B. For example, the extending part 181B may move independently of a display 160B (e.g., the display device 160 of FIG. 1). In this case, as a part of the housing 120B relatively more protrudes to one side than the display 160B, the extending part 181B may be formed. For another example, the extending part 181B may move together with the display 160B. In this case, as a part of the housing 120B and the display 160B relatively protrudes to one side, the extending part 181B may be formed. According to an embodiment, the extending part 181B may include a camera module. For example, the camera module may be configured to rotate along the movement of the extending part 181B. A change in the shape of the second electronic device 101B will be described in detail with reference to FIG. 5 described below.

According to an embodiment, a third electronic device 101C (e.g., the electronic device 101 of FIG. 1) may include an extending part 181B which is expanded and/or retracted left and right. For example, a display 160C (e.g., the display device 160 of FIG. 1) of the third electronic device 101C may be a rollable display. For example, the display 160C may be rolled to be received in a first housing 121C. At this time, the state of the third electronic device 101C may be referred to as a normal mode. For example, as the display 160C is unrolled, it may be expanded between the first housing 121C and a second housing 122C. At this time, the state of the third electronic device 101C may be referred to as an expanded mode. As the display 160C is expanded, an extending part 181C may be generated.

The changes in the physical shapes of the electronic devices (e.g., the first electronic device 101A, the second electronic device 101B, and the third electronic device 101C) illustrated in FIG. 4 are illustrative, and embodiments of the disclosure are not limited thereto. For example, the electronic device may be expanded or retracted in any direction.

FIG. 5 illustrates an electronic device 101B which varies in shape, according to various embodiments.

Referring to FIG. 5, an electronic device 101B (e.g., an electronic device 101 of FIG. 1) according to an embodiment may include a display 160B (e.g., a display device 160 of FIG. 1), a first cover 581, and a second cover 582. The display 160B may be divided into a first display area 161B and a second display area 162B depending on expanding and/or retracting. For example, the display 160B may be divided into the first display area 161B and the second display area 162B around the second cover 582 of the electronic device 101B in the normal mode 501. The division of the first display area 161B and the second display area 162B may be the logical division of the display area.

According to an embodiment, the display 160B (e.g., the display device 160 of FIG. 1) may visually provide information to the outside (e.g., a user) of the electronic device 101B. The display of the disclosure may be understood as a flexible display capable of being bent. For example, as the user manipulates the electronic device 101B to vary a shape of the electronic device 101B, at least a portion of the display 160B may be rolled into an edge of one side (e.g., a -X-axis direction) of the electronic device 101B or may be unrolled from the edge of the one side. For another example, when an external input (e.g., a swipe touch input to a first user interface) is detected, a processor (e.g., a processor 120 of FIG. 2) may transmit a control signal to a driving unit (e.g., a driving unit 310 of FIG. 2), and the driving unit may drive at least a portion of the display 160B to be rolled into an edge of one side (e.g., a -X-axis direction) of the electronic device 101B or be unrolled from the edge of the one side in response to the received control signal.

The first cover 581 may serve as a fixing cover which fixes one side of the display 160B. The second cover 582 may move in a +X-axis direction or a -X-axis direction with respect to the first cover 581. The user may move the second cover 582 to manipulate the shape of the electronic device 101B. For example, the state of the electronic device 101B when the area where the first cover 581 and the second cover 582 are in contact with each other is maximum as the second cover 582 slides in the -X-axis direction may be referred to as a normal mode 501 (e.g., a normal mode). For another example, the state of the electronic device 101B when the area where the first cover 581 and the second cover 582 are in contact with each other is minimum as the second cover 582 slides in the +X-axis direction may be referred to as an expanded mode 503 (e.g., an expanded mode). For another example, the user may move the second cover 582 to deform the electronic device 101B in a first state (not shown) rather than the normal mode 501 and the expanded mode 503. The first state may be referred to as all states capable of being indicated when the electronic device 101B is deformed from the normal mode 501 to the expanded mode 503.

According to an embodiment, an area of a display area, which is visually exposed to a front surface (a +Z-axis direction) of the electronic device 101B may vary with a change in the shape of the electronic device 101B. The display 160B may be divided into the first display area 161B and the second display area 162B. For example, when the electronic device 101B is the normal mode 503 (e.g., the normal mode), the first display area 161B may be visually exposed to a front surface of the electronic device 101B. The second display area 162B may be rolled into one side of the electronic device 101B (e.g., an edge in the -X-axis direction of the electronic device 101B) to be disposed towards a side surface (the -X-axis direction) and/or a rear surface (a -Z-axis direction). In this case, the second display area 162B may be hidden by at least a portion of the first cover 581 and the second cover 582. For example, when the electronic device 101B is the expanded mode 503 (e.g., the expanded mode), both the first display area 161B and the second display area 162B may be visually exposed to the front surface of the electronic device 101B. For another example, when the electronic device 101B is in the first state (not shown), the first display area 161B may be visually exposed to the front surface of the electronic device 101B, but only a portion of the second display area 162B may be visually exposed to the front surface of the electronic device 101B and the other may be rolled into one side of the electronic device 101B to be disposed towards the side surface (the - X-axis direction) and/or the rear surface (the -Z-axis direction).

Various electronic components associated with driving the display 160B and electronic components (e.g., a processor, a memory, a power management module, a sensor module, a roller, a rail structure, and a driving unit) associated with various user functions supported by the electronic device 101B may be arranged at an inner side of the first cover 581 and the second cover 582.

FIG. 5 illustrates that the electronic device 101B changes in shape in a horizontal direction with respect to an X-axis while one side is fixed, but not limited thereto. For example, the display 160B may be expanded and/or retracted in a vertical direction with respect to a Y-axis. For another example, a third display area (not shown) may be additionally expanded in a -X-axis direction with respect to the second display area 162B.

As referenced in FIGS. 4 and 5, contents where the electronic device capable of changing the physical shape provides various user interface based on the change in shape will be described in detail with reference to FIGS. 6A and 6B described below.

Hereinafter, in FIGS. 6A and 6B, an electronic device (e.g., the electronic device 101 of FIG. 1) for providing various user interfaces depending on a change in orientation of the electronic device is disclosed.

FIG. 6A illustrates an electronic device for providing a user interface, according to various embodiments.

Referring to FIG 6A, an electronic device 601 may include a housing 620 and a flexible display 660. The flexible display 660 may display a user interface 610 associated with a call function on at least one area. The electronic device 601 may be used while held in a state where a vertical direction of the housing is longer than a horizontal direction, with respect to a viewpoint at which the user looks.

According to an embodiment, the flexible display 660 may slide out (i.e. extend) in a first direction 603A from the housing 620 or may slide in (i.e. retracts) in a second direction 607A which is a direction opposite to the first direction 603A. For example, as shown in FIG. 6A, a shape where the shape of the flexible display 660 is expanded in the first direction 603A may be referred to as an expanded mode (e.g., an expanded mode 503 of FIG. 5). In the expanded mode, the flexible display 660 may be retracted in the second direction 607A. The retracted shape may be referred to as a normal mode (e.g., a normal mode 501 of FIG. 5).

According to an embodiment, the electronic device 601 may identify a shape of the flexible display 660 using at least one sensor, in response to a call (e.g., an incoming call and/or an outgoing call) with an external electronic device. When the shape of the flexible display 660 is identified as the expanded mode, the electronic device 601 may display a user interface 610 associated with the call with the external electronic device on at least one area of the flexible display 660. The user interface 610 may include a first user interface 611A and/or a second user interface 613A. The first user interface 611A may further include a user interface corresponding to executing a call function (e.g., a function associated with receiving a call). The first user interface 611A may include a graphic user interface (GUI) (e.g., an execution icon 621A) associated with executing the call function. The phone icon 621A illustrated in FIG. 6A is illustrative and is not limited to the illustrated shape, which may be changed and displayed in various forms. The second user interface 613A may further include a user interface corresponding to the end of the call function (e.g., a function associated with declining a call). The second user interface 613A may include a graphic user interface (GUI) (e.g., an end icon 623A) associated with ending the call function. The phone icon 623A illustrated in FIG. 6A is illustrative and is not limited to the illustrated shape, which may be changed and displayed in various forms.

According to an embodiment, the first user interface 611A may be configured such that the electronic device 601 provides different functions depending on a direction of a swipe touch input by the user. The first user interface 611A may determine the call mode set to switch when a swipe touch input corresponding to the first direction 603A is detected as one of a speaker mode or a video call mode, in response to a specified touch input of the user. The specified touch input may include, for example, a single touch, a double touch, a pressure input, a long press input, or a multi-touch input. When the swipe touch input corresponding to the first direction 603A is detected on the first user interface 611A, the electronic device 601 may switch the call mode to a call mode determined based on the specified touch input to execute the call function. For example, the electronic device 601 may identify a shape of the display 660 in response to in response to the call with the external electronic device and may set the call mode to the speaker mode or the video call mode to execute the call function when the swipe touch input corresponding to the first direction 603A is detected on the first user interface 611A, when identifying the shape of the flexible display 660 as the expanded mode. At this time, the electronic device 601 may provide the call function while maintaining the flexible display 660 in an expanded state.

According to an embodiment, when the swipe touch input corresponding to the second direction 607A is detected on the first user interface 611A, the electronic device 601 may retract the flexible display 660 in the second direction 607A using a driving unit (e.g., a driving unit 310 of FIG. 3). When the flexible display 660 is retracted in the second direction 607A, the electronic device 601 may set the call mode to a receiver mode to provide the call function.

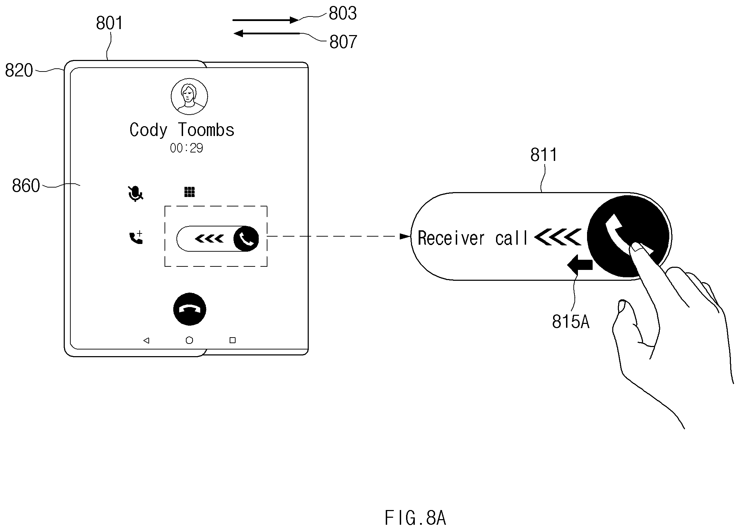

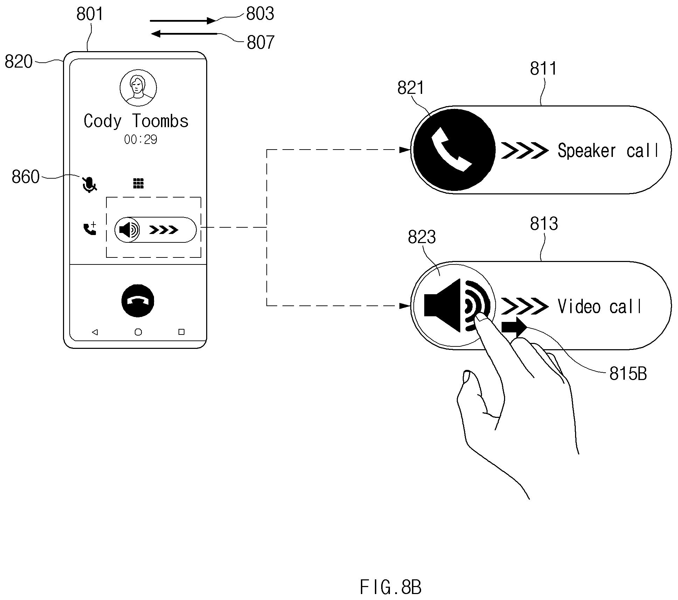

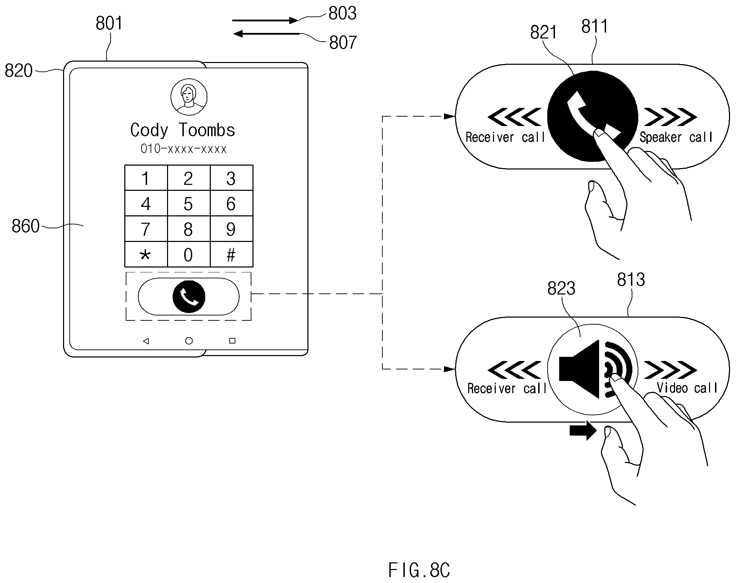

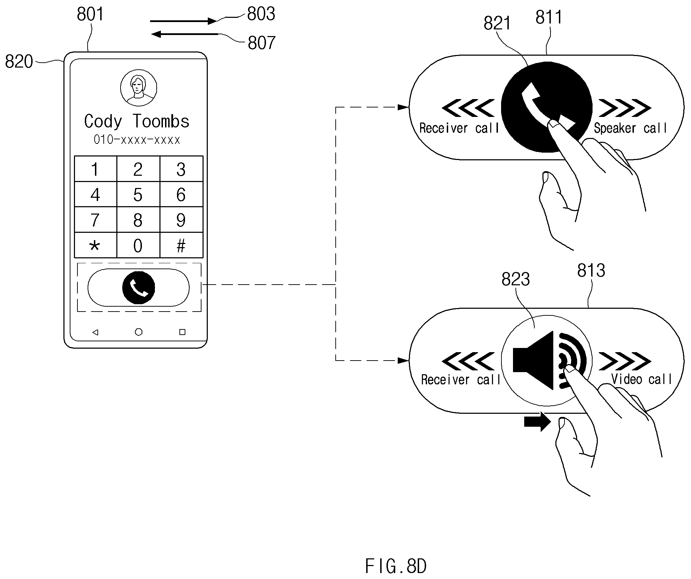

According to an embodiment, the electronic device 601 may display a user interface corresponding to the first user interface 611A on one region of the flexible display 660, in the state where the call function is executed. The electronic device which outputs the user interface associated with the call function in the state where the call function is executed will be described in detail with reference to FIG. 8 described below.

According to an embodiment, the second user interface 613A may be configured such that the electronic device 601 provides different functions depending on a direction of a swipe touch input by the user. The second user interface 613A may determine a messenger function execution mode set to be executed when the swipe touch input corresponding to the first direction 603A is detected as one of an SMS execution mode, an MMS execution mode, or an instance message service execution mode, in response to a specified touch input of the user. The specified touch input may include, for example, a single touch, a double touch, a pressure input, a long press input, or a multi-touch input. When the swipe touch input corresponding to the first direction 603A is detected on the second user interface 613A, the electronic device 601 may end the call with the external electronic device and may execute a message function in an execution mode determined based on the specified touch input.

According to an embodiment, when the swipe touch input corresponding to the second direction 607A is detected on the second user interface 613A, the electronic device 601 may end the call with the external electronic device and may continue executing the operation which is being previously executed.

FIG. 6B illustrates an electronic device for providing a user interface, according to various embodiments.

Referring to FIG 6B, an electronic device 601 may include a housing 620 and a flexible display 660. The flexible display 660 may display a user interface 610 associated with a call function on at least one area. The electronic device 601 may be used while held in a state where a horizontal direction of the housing is longer than a vertical direction, with respect to a viewpoint at which the user looks. Unless described differently, a description of components having the same reference numerals as those in FIG. 6A may refer to the description of FIG. 6A.

According to an embodiment, the flexible display 660 may be expanded in a third direction 603A from the housing 620 or may be retracted in a fourth direction 607A which is a direction opposite to the third direction 603B. For example, as shown in FIG. 6B, a shape where the shape of the flexible display 660 is expanded in the third direction 603c may be referred to as an expanded mode (e.g., an expanded mode 503 of FIG. 5). For another example, the flexible display 660 may be retracted in the fourth direction 607B in the expanded mode. As such, the shape where the flexible display 660 is retracted may be referred to as a normal mode (e.g., a normal mode 501 of FIG. 5). The third direction 603B and the fourth direction 607B may correspond to a first direction 603A and a second direction 607, which are described in FIG. 6A, respectively.

According to an embodiment, in response to a call with an external electronic device, the electronic device 601 may display a user interface 610 associated with the call on one region of the flexible display 660. The user interface 610 may include a third user interface 611B associated with executing a call function and a fourth user interface 613B associated with ending the call function. The third user interface 611B may include a graphic user interface (GUI) (e.g., an execution icon 621B) associated with executing the call function. The phone icon 621B illustrated in FIG. 6B is illustrative and is not limited to the illustrated shape, which may be changed and displayed in various forms. The fourth user interface 613B may include a graphic user interface (GUI) (e.g., an execution icon 623B) associated with executing the call function. The phone icon 623B illustrated in FIG. 6B is illustrative and is not limited to the illustrated shape, which may be changed and displayed in various forms. The third user interface 611B, the fourth user interface 613B, the execution icon 621B, and the end icon 623B may correspond to a first user interface 611A, a second user interface 613A, an execution icon 621A, and an end icon 623A, which are described in FIG. 6A, respectively.

Hereinafter, an electronic device (e.g., an electronic device 101 of FIG. 1) is illustrated in a state where a vertical direction of a housing is longer than a horizontal direction with respect to a viewpoint at which the user looks as illustrated in FIG. 6A, but not limited thereto. For example, the electronic device may provide the same function even in the state illustrated in FIG. 6B.

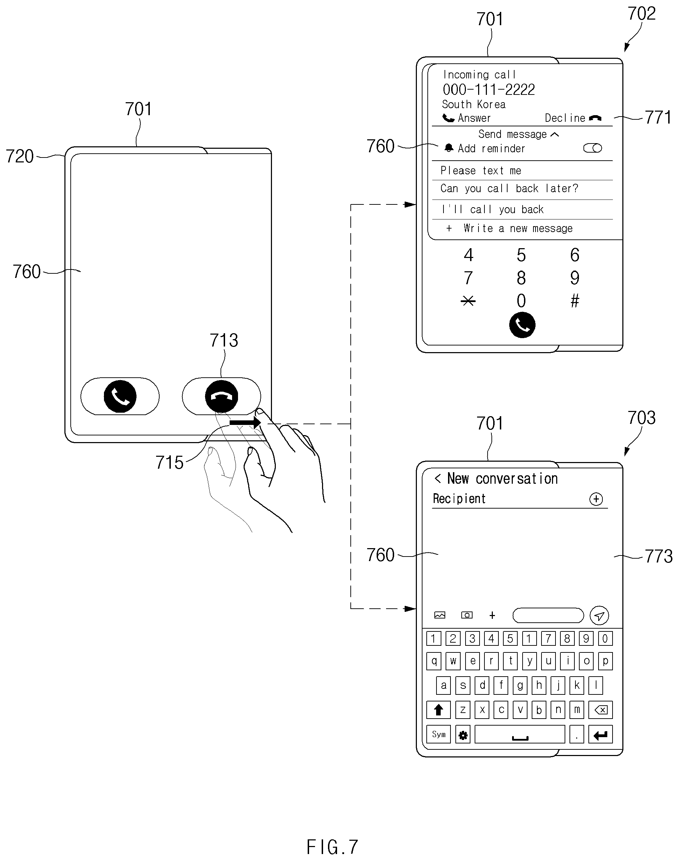

FIG. 7 illustrates an electronic device 701 for ending a call function and providing a text function, according to various embodiments.

According to an embodiment, in response to a call with an external electronic device, the electronic device 701 may display a user interface associated with the call on one region of a flexible display 760. At this time, the flexible display 760 may have a shape expanded in a first direction 715 (e.g., a first direction 603A of FIG. 6A) from a housing 720. The electronic device 701 may identify a shape of the flexible display 760 using at least one sensor.

According to an embodiment, when the swipe touch input corresponding to the first direction 715 is detected on a second user interface 713 displayed on one region of the flexible display 760, the electronic device 701 may end the call with the external electronic device and may execute a function for transmitting a message to the external electronic device. For example, the function for transmitting the message to the external electronic device may include one of an SMS execution mode, an MMS execution mode, or an instant message service execution mode. A user may preset a message transmission mode provided by the electronic device 701.

Referring to reference numeral 702, according to an embodiment, when the swipe touch input corresponding to the first direction 715 is detected on the second user interface 713 displayed in response to the call with the external electronic device, the electronic device 701 may end the call with the external electronic device and may execute a text function in an instant message service execution mode 771. At this time, the electronic device 701 may provide the text function in a state where identification information (e.g., a phone number) of the external electronic device is input when executing the text function. The electronic device 701 which provides the instant message service execution mode 771 may display at least one previously stored message sample on one region of the flexible display 760. When the user touches and selects one of the samples, the electronic device 701 may transmit a message including contents corresponding to the sample to the external electronic device.

Referring to reference numeral 703, according to an embodiment, when the swipe touch input corresponding to the first direction 715 is detected on the second user interface 713 displayed in response to the call with the external electronic device, the electronic device 701 may end the call with the external electronic device and may execute the text function in a message function (e.g., SMS, MMS, or the like) execution mode 773. At this time, the electronic device 701 may provide the text function in the state where the identification information (e.g., the phone number) of the external electronic device is input when executing the text function. The electronic device 701 which provides the SMS execution mode 773 may provide a keypad user interface, such that the user directly writes message contents.

Hereinafter, in FIGS. 8A, 8B, 8C, and 8D, an electronic device which provides a user interface while executing a call function (e.g., an incoming call and/or an outgoing call) is disclosed. Unless described differently, a description of components having the same reference numerals as those in FIG. 8A in FIGS. 8B, 8C, and 8D may refer to the description of FIG. 8A.

FIG. 8A illustrates an electronic device 801 for providing a user interface while executing a call function, according to various embodiments.

According to an embodiment, the electronic device 801 (e.g., an electronic device 101 of FIG. 1) may execute a call (e.g., incoming call) function in a state where the shape of a flexible display 860 is in an expanded mode (e.g., an expanded mode 503 of FIG. 5). For example, the electronic device 801 may execute the call function in a speaker mode or a video call mode in a state where the flexible display 860 is expanded in a first direction 803 from a housing 820. The electronic device 801 may display a first user interface 811 on one region of the flexible display 860 in a state where the call function is executed. The first user interface 811 may include at least a portion of a GUI of a first user interface 611A of FIG. 6A.

According to an embodiment, when a swipe touch input 815A corresponding to a second direction 807 is detected on the first user interface 811 in the state where the call function is executed, the electronic device 801 may retract the flexible display 860 in the second direction 807 which is a direction opposite to the first direction 803 using a driving unit. When the flexible display 860 is retracted in the second direction 807, the electronic device 801 may set the call mode to a receiver mode to continue executing the call function.

FIG. 8B illustrates an electronic device 801 for providing a user interface while executing a call function, according to various embodiments.

According to an embodiment, the electronic device 801 (e.g., an electronic device 101 of FIG. 1) may execute a call (e.g., incoming call) function in a state where the shape of a flexible display 860 is in a normal mode (e.g., a normal mode 501 of FIG. 5). For example, the electronic device 801 may execute the call function in a receiver mode in a state where the flexible display 860 is retracted in a second direction 807 from a housing 820. The electronic device 801 may display a first user interface 811 on one region of the flexible display 860 in a state where the call function is executed. The first user interface 811 may include at least a portion of a GUI of a first user interface 611A of FIG. 6A.

According to an embodiment, the first user interface 811 may determine a call mode to switch as one of a speaker mode and a video call mode, in response to a specified touch input (e.g., a single touch, a double touch, a multi-touch, a long press, and/or a pressure input) to at least one area of the first user interface 811 including a first execution icon 821. For example, when a specified touch input is detected on at least one area of the first user interface 811 to switch the call mode to the speaker mode, the electronic device 801 may change the first user interface 811 to a user interface 813 to switch the call mode to the video call mode and may display the user interface 813 on the flexible display 860. The user interface 813 to switch the call mode to the video call mode may include at least a portion of a GUI of a first user interface 611A of FIG. 6A. For another example, when a specified touch input is detected on at least one area of the user interface 813 including a second execution icon 823, the electronic device 801 may change the user interface 813 to the first user interface 811 to switch the call mode to the speaker mode and may display the first user interface 811 on the flexible display 860. In other words, the electronic device 801 may toggle a user interface to be displayed on the flexible display 860, in response to a specified touch input of the user to at least one area of the first user interface 811 and/or the user interface 813.

According to an embodiment, when a swipe touch input 815B corresponding to the first direction 803 is detected on the first user interface 811 in the state where the call function is executed in the received mode, the electronic device 801 may expand the flexible display 860 in the first direction 803 using the driving unit. For example, when the flexible display 860 is expanded in the first direction 803, the electronic device 801 may set the call mode from the receiver mode to a speaker mode to continue executing the call function. For another example, when the swipe touch input 815B corresponding to the first direction 803 is detected on the user interface 813 changed based on a single touch input, the electronic device 801 may switch the call mode from the receiver mode to the video call mode to continue executing the call function.

FIG. 8C illustrates an electronic device 801 for providing a user interface while executing a call function, according to various embodiments.

According to an embodiment, the electronic device 801 (e.g., an electronic device 101 of FIG. 1) may execute a call (e.g., outgoing call) function in a state where the shape of a flexible display 860 is in an expanded mode (e.g., an expanded mode 503 of FIG. 5). The electronic device 801 may display a user interface (e.g., a first user interface 811) for executing the outgoing call function on at least one area of the flexible display 860 in a state where the flexible display 860 is expanded in a first direction 803 from a housing 820. For example, when a swipe touch input corresponding to a first direction 803 is detected on the first user interface 811, the electronic device 801 may maintain a shape of the flexible display 860 in an expanded mode and may set a call mode to a speaker mode or a video call mode to execute a call function. For another example, when a swipe touch input corresponding to a second direction 807 is detected on the first user interface 811, the electronic device 801 may convert a shape of the flexible display 860 into a normal mode (e.g., a normal mode 501 of FIG. 5) using a driving unit and may set the call mode to a receiver mode to execute the call function.

According to an embodiment, the first user interface 811 may determine a call mode to switch as one of the speaker mode and the video call mode, in response to a specified touch input (e.g., a single touch, a double touch, a multi-touch, a long press, and/or a pressure input) to at least one area of the first user interface 811 including a first execution icon 821. For example, when a specified touch input is detected on at least one area of the first user interface 811 to switch the call mode to the speaker mode, the electronic device 801 may change the first user interface 811 to a user interface 813 to switch the call mode to the video call mode and may display the user interface 813 on the flexible display 860. For another example, when a specified touch input is detected on at least one area of the user interface 813 including a second execution icon 823, the electronic device 801 may change the user interface 813 to the first user interface 811 to switch the call mode to the speaker mode and may display the first user interface 811 on the flexible display 860. In other words, the electronic device 801 may toggle a user interface to be displayed on the flexible display 860, in response to a specified touch input of the user to at least one area of the first user interface 811 and/or the user interface 813.

FIG. 8D illustrates an electronic device 801 for providing a user interface while executing a call function, according to various embodiments.

According to an embodiment, the electronic device 801 (e.g., an electronic device 101 of FIG. 1) may execute a call (e.g., outgoing call) function in a state where the shape of a flexible display 860 is in a normal mode (e.g., a normal mode 501 of FIG. 5). The electronic device 801 may display a user interface (e.g., a first user interface 811) for executing the outgoing call function on at least one area of the flexible display 860 in a state where the flexible display 860 is retracted in a second direction 807 from a housing 820. For example, when a swipe touch input corresponding to a first direction 803 is detected on the first user interface 811, the electronic device 801 may convert a shape of the flexible display 860 into an expanded mode (e.g., an expanded mode 503 of FIG. 5) using a driving unit and may set a call mode to a speaker mode or a video call mode to execute the call function. For another example, when a swipe touch input corresponding to the second direction 807 is detected on the first user interface 811, the electronic device 801 may maintain the shape of the flexible display 860 in the normal mode and may set the call mode to a receiver mode to execute the call function.

According to an embodiment, the first user interface 811 may determine a call mode to switch as one of the speaker mode and the video call mode, in response to a specified touch input (e.g., a single touch, a double touch, a multi-touch, a long press, and/or a pressure input) to at least one area of the first user interface 811 including a first execution icon 821. For example, when a specified touch input is detected on at least one area of the first user interface 811 to switch the call mode to the speaker mode, the electronic device 801 may change the first user interface 811 to a user interface 813 to switch the call mode to the video call mode and may display the user interface 813 on the flexible display 860. For another example, when a specified touch input is detected on at least one area of the user interface 813 including a second execution icon 823, the electronic device 801 may change the user interface 813 to the first user interface 811 to switch the call mode to the speaker mode and may display the first user interface 811 on the flexible display 860. In other words, the electronic device 801 may toggle a user interface to be displayed on the flexible display 860, in response to a specified touch input of the user to at least one area of the first user interface 811 and/or the user interface 813.

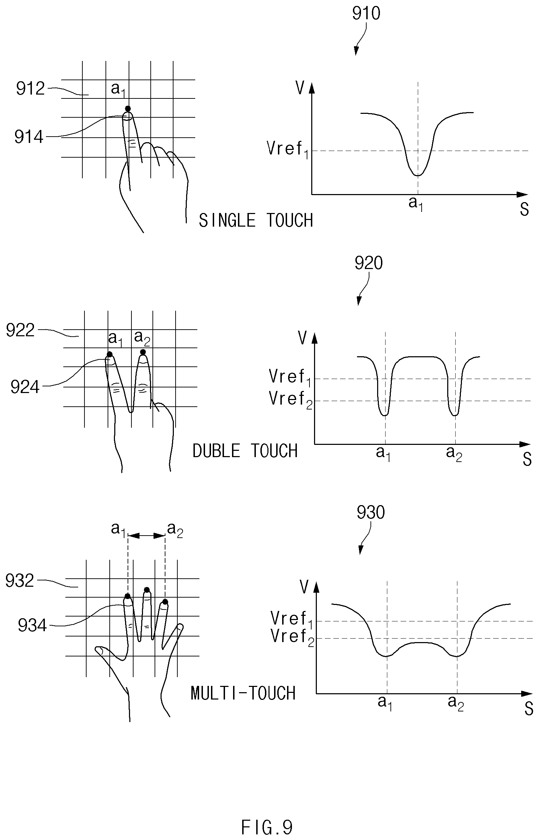

FIG. 9 is a drawing for describing the definition of a touch according to an embodiment.

According to an embodiment, a touch may be referred to as a term including both of a direct touch and a proximity touch. For example, an electronic device may include at least one sensor for sensing a touch input in a display (e.g., a display 210 of FIG. 2). When a touch signal is detected by a plurality of adjacent sensors on a touch screen, a touch area and a touch point may be determined on the basis of coordinates where the plurality of sensors are located.

According to an embodiment, the touch input may be a single touch input 910. The single touch input may be an operation having one contact point on a surface of the touch screen. For example, the single touch input may be referred to as a value where a voltage value detected around an area 914 (e.g., area a1) with which a finger is in contact on a touch screen area 912 is lower than a first reference voltage value Vref1.

According to an embodiment, the touch input may be a double touch input 920. The double touch input may be an operation having two contact points on the surface of the touch screen. For example, the double touch input may be an operation having a value where it is lower than a second reference voltage value Vref2 in a first area (e.g., area a1) and a second area (e.g., area a2), which are areas 924 with which fingers are in contact on the touch screen area 922. An area having a voltage value which is greater than the first reference voltage value Vref1 may be generated between the first area and the second area by means of the double touch input of the user. For example, the first reference voltage value Vref1 may be referred to as a value higher than the second reference voltage value Vref2.

According to an embodiment, the touch input may be a multi-touch input 930. The multi-touch input 930 may be an operation having two or more contact points on the surface of the touch screen. For example, the multi-touch input may be an operation where an area (e.g., one area between area a1 and area a2) having a potential value lower than the second reference voltage value Vref2 is present in an area 934 with which a body of the user is in contact on the touch screen area 932. For example, an area having a voltage value less than the first reference voltage value Vref1 may be generated in the area 934 by means of the multi-touch input of the user. For example, the first reference voltage value Vref1 may be referred to as a value higher than the second reference voltage value Vref2. One area (e.g., area a1 or area a2) of an area with which the body is in contact may be away from each other over a certain distance. For example, a processor (e.g., a processor 120 of FIG. 1) may adjust the certain distance to identify an area touch.

A user input received by the display among various embodiments of the disclosure and terms described therein may be at least one of examples of touches illustrated in FIG. 9.

The touch input of the user is illustrated as three types of the single touch, the double touch, and the multi-touch in FIG. 9, but embodiments of the disclosure are not limited thereto. For example, the touch input of the user may further include a long press input, a touch swipe, or a pressure input. The long press input may be an input where an input applied to a contact point on the surface of the touch screen is longer than a specified time. The touch swipe may be an input where pressure is applied to a plurality of consecutive contact points on a certain area. The pressure input may be an input where a pressure of a certain amount or more is applied to a contact point.

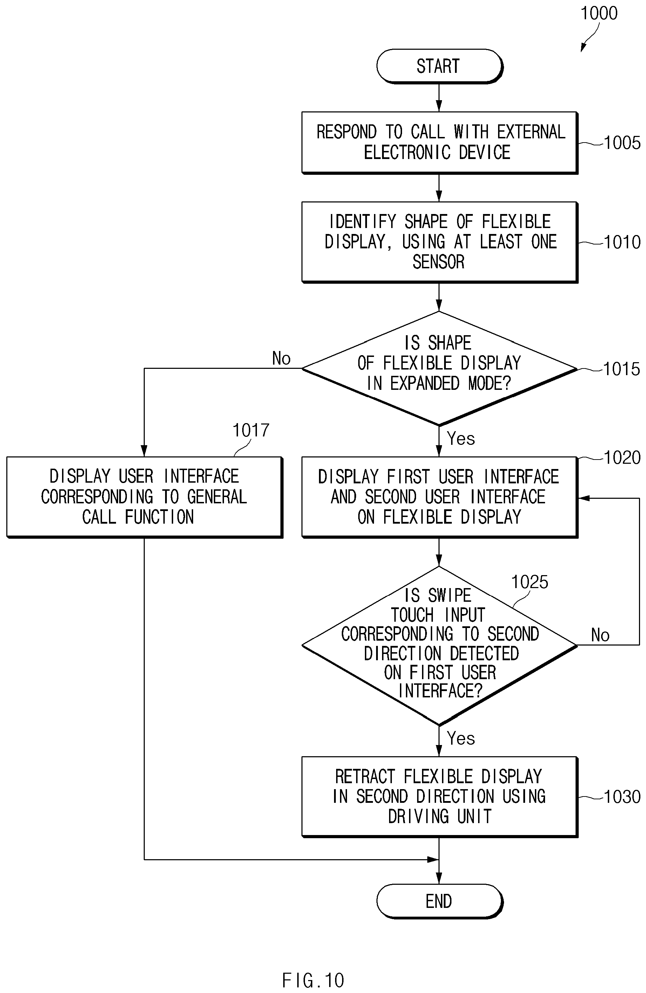

FIG. 10 illustrates an operational flowchart 1000 of an electronic device, according to various embodiments.

Referring to FIG. 10, in operation 1005, an electronic device (e.g., an electronic device 101 of FIG. 1) may respond to a call with an external electronic device. For example, the responding to the call with the external electronic device may include transmitting, by the electronic device, a call to the external electronic device and receiving, by the electronic device, a call from the external electronic device.

In operation 1010, the electronic device may identify a shape of a flexible display (e.g., a display device 160 of FIG. 1) using at least one sensor included in a sensor module (e.g., a sensor module 176 of FIG. 1), in response to the call with the external electronic device. The flexible display may be expanded in a first direction (e.g., a first direction 603A of FIG. 6A or a third direction 603B of FIG. 6B) from a housing included in the electronic device or may be retracted in a second direction (e.g., a second direction 607A of FIG. 6A or a fourth direction 607B of FIG. 6B) which is a direction opposite to the first direction. The shape expanded in the first direction may be referred to as an expanded mode (e.g., an expanded mode 503 of FIG. 5), and the shape retracted in the second direction may be referred to as a normal mode (e.g., a normal mode 501 of FIG. 5).

In operation 1015, the electronic device may identify the shape of the flexible display using the at least one sensor included in the sensor module (e.g., the sensor module 176 of FIG. 1).

When the flexible display is not identified as the expanded mode in operation 1015 (e.g., operation 1015-No), the electronic device may perform operation 1017.

When the flexible display is identified as the expanded mode in operation 1015 (e.g., operation 1015-Yes), the electronic device may perform operation 1020.

In operation 1017, the electronic device may display a user interface corresponding to a general call function. For example, the electronic device may execute a call function in the normal mode. At this time, the electronic device may set a call mode to a receiver mode.

In operation 1020, the electronic device may display a first user interface (e.g., a first user interface 611A of FIG. 6A or a third user interface 611B of FIG. 6B) and/or a second user interface (e.g., a second user interface 613A of FIG. 6A or a fourth user interface 613B of FIG. 6B), which are/is associated with the call, on at least one area of the flexible display. The electronic device may further display information (e.g., a phone number) associated with the external electronic device on the at least one area of the flexible display. The first user interface may correspond to a user interface for controlling the execution of the call function, and the second user interface may correspond to a user interface for controlling the end of the call function. The first and second user interfaces may control the electronic device based on a swipe touch input.

In operation 1025, the electronic device may detect a swipe touch input corresponding to a corresponding the second direction which is a direction opposite to the first direction with respect to the first user interface. The flexible display may include a pressure sensor. The electronic device may identify a direction of the swipe touch input using the pressure sensor.

When the swipe touch input corresponding to the second direction is not detected on the first user interface in operation 1025 (e.g., operation 1025-No), the electronic device may continue performing operation 1020.

When the swipe touch input corresponding to the second direction is detected on the first user interface in operation 1025 (e.g., operation 1025-Yes), the electronic device may perform operation 1030.

In operation 1030, the electronic device may retract the flexible display in the second direction using a driving unit (e.g., a driving unit 310 of FIG. 3). After the flexible display is retracted, the electronic device may set the call mode to the receiver mode and may execute the call function with the external electronic device. For example, in the state where the call function is executed in the receiver mode, the electronic device may continue displaying the first user interface on the one region of the flexible display. The user may perform a specific touch input on the first user interface to switch the call mode of the electronic device which is performing the call function in the normal mode to a speaker mode or a video call mode such that the flexible display is expanded in the first direction.

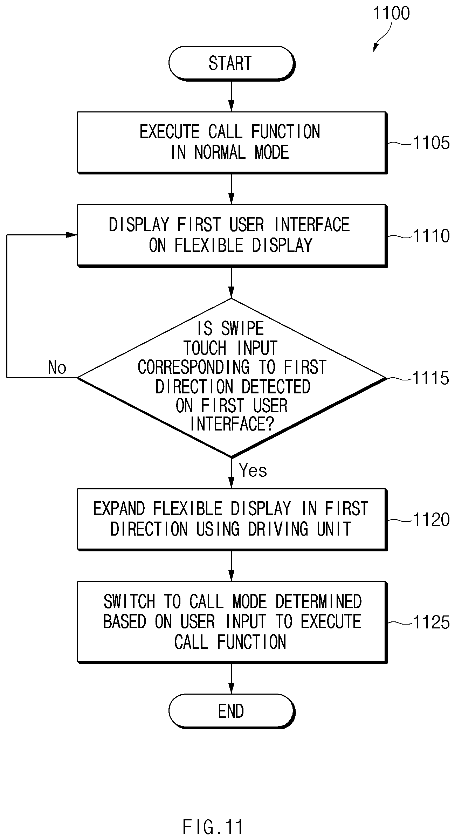

FIG. 11 illustrates an operational flowchart 1100 of an electronic device, according to various embodiments.

In operation 1105, an electronic device (e.g., an electronic device 101 of FIG. 1) may execute a call function in a state where a flexible display (e.g., a display 210 of FIG. 2) is in a normal mode (e.g., a normal mode 501 of FIG. 5). For example, the electronic device may set the call function to a receiver mode to execute the call function.

In operation 1110, the electronic device may display a first user interface (e.g., a first user interface 811 of FIG. 6B or a user interface 813 of FIG. 8B) on at least one area of the flexible display. For example, the first user interface may correspond to a user interface associated with executing the call function. The first user interface may be configured such that the electronic device provides different functions associated with the call depending on a direction of a swipe touch input which is input by a user. For example, the electronic device may divide swipe touch inputs corresponding to a first direction (e.g., a first direction 803 of FIG. 8B) applied to the first user interface and a second direction (e.g., a second direction 807 of FIG. 8B) which is a direction opposite to the first direction and may provide a different function for each input of each direction.

In operation 1115, the electronic device may detect a swipe touch input corresponding to the first direction with respect to the first user interface displayed on at least one area of the flexible display.

When the swipe touch input corresponding to the first direction is not detected on the first user interface in operation 1115 (e.g., operation 1115-No), the electronic device may continue performing operation 1110.

When the swipe touch input corresponding to the first direction is detected on the first user interface in operation 1115 (e.g., operation 1115-Yes), the electronic device may perform operation 1120.

When the swipe touch input corresponding to the first direction is detected on the first user interface, in operation 1120, the electronic device may expand the flexible display in the first direction using a driving unit.

In operation 1125, the electronic device may allow the driving unit to expand the flexible display in the first direction and may switch to a call mode (e.g., a speaker mode or a video call mode) determined based on a specified user input to execute the call function. For example, the user input may be at least one of a single touch, a double touch, a multi-touch, a long press, or a pressure input on at least one area of the first user interface. The first user interface may determine the call mode set to switch when the swipe touch input corresponding to the first direction is detected as one of the speaker mode or the video call mode, in response to a specified user input. For example, when the swipe touch input corresponding to the first direction is initially detected on the first user interface, the electronic device may expand the flexible display in the first direction using the driving unit and may switch the call mode to the speaker mode to execute the call function. Meanwhile, when the swipe touch input corresponding to the first direction is detected after the specified user input is detected once on the at least one area of the first user interface, the electronic device may expand the flexible display in the first direction using the driving unit and may switch the call mode to the video call mode to execute the call function.

According to various embodiments of the disclosure, an electronic device may include a housing, a flexible display expanded in a first direction from the housing and retracted in a second direction being a direction opposite to the first direction, a driving unit connected with the flexible display, at least one sensor, a processor, and a memory operatively connected with the processor.

According to an embodiment, the memory may store one or more instructions causing the processor to identify a shape of the flexible display using the at least one sensor, in response to executing a call reception function or a call transmission function, display a first user interface associated with a call function which is being executed on at least one area of the flexible display, when identifying the shape of the flexible display as an expanded mode, and retract the flexible display in the second direction using the driving unit, when a swipe touch input corresponding to the second direction is detected on the first user interface.

According to an embodiment, the one or more instructions, when executed, may cause the processor to set a call mode of the electronic device to a receiver mode to execute the call function, when the flexible display is retracted in the second direction.

According to an embodiment, the one or more instructions, when executed, may cause the processor to display the first user interface on the one region of the flexible display, in a state where the call function is executed in the receiver mode, and expand the flexible display in the first direction using the driving unit, when a swipe touch input corresponding to the first direction is detected on the first user interface.

According to an embodiment, the first user interface may determine a call mode set to switch when the swipe touch input corresponding to the first direction is detected as one of a speaker mode or a video call mode, in response to a single touch input.

According to an embodiment, the one or more instructions, when executed, may cause the processor to switch the call mode of the electronic device to a call mode determined based on the single touch input to execute the call function, when the flexible display is expanded in the first direction.

According to an embodiment, the one or more instructions, when executed, may cause the processor to maintain the shape of the flexible display as the expanded mode, when a swipe touch input corresponding to the first direction is detected on the first user interface, and set a call mode of the electronic device to a speaker mode or a video call mode to execute the call function.

According to an embodiment, the one or more instructions, when executed, may cause the processor to display the first user interface on the one region of the flexible display, in the state where the call function is executed in the speaker mode or the video call mode, retract the flexible display in the second direction using the driving unit, when the swipe touch input corresponding to the second direction is detected on the first user interface, and switch the call mode of the electronic device to a receiver mode to execute the call function.

According to an embodiment, the one or more instructions, when executed, may cause the processor to further display a second user interface associated with a call on the at least one area of the flexible display and end the call function which is being executed, when the swipe touch input corresponding to the second direction is detected on the second user interface.

According to an embodiment, the one or more instructions, when executed, may cause the processor to further display a second user interface associated with a call on the at least one area of the flexible display and end the call function which is being executed and execute a function for transmitting a message, when a swipe touch input corresponding to the first direction is detected on the second user interface.

According to an embodiment, the function for transmitting the message may operate in a mode preset by a user, and the mode may include at least one of an SMS execution mode, an MMS execution mode, or an instant message service execution mode.

According to various embodiments of the disclosure, a method for performing a call function in an electronic device may include identifying a shape of a flexible display using at least one sensor, in response to executing a call reception function or a call transmission function, displaying a first user interface associated with the call function which is being executed on at least one area of the flexible display, when identifying the shape of the flexible display as an expanded mode, and retracting the flexible display in a second direction being a direction opposite to a first direction using a driving unit, when a swipe touch input corresponding to the second direction is detected on the first user interface.

According to an embodiment, the method for performing the call function in the electronic device may further include setting a call mode of the electronic device to a receiver mode to execute the call function, when the flexible display is retracted in the second direction.

According to an embodiment, the method for performing the call function in the electronic device may further include displaying the first user interface on the one region of the flexible display, in the state where the call function is executed in the receiver mode, and expanding the flexible display in the first direction using the driving unit, when a swipe touch input corresponding to the first direction is detected on the first user interface.

According to an embodiment, the expanding of the flexible display in the first direction using the driving unit, when the swipe touch input corresponding to the first direction is detected on the first user interface, may further include switching the call mode of the electronic device to a call mode determined based on the single touch input.

According to an embodiment, the retracting of the flexible display in the second direction using the driving unit, when the swipe touch input corresponding to the second direction being the direction opposite to the first direction is detected on the first user interface, may be maintaining the shape of the flexible display as the expanded mode, when a swipe touch input corresponding to the first direction is detected on the first user interface, and setting a call mode of the electronic device to a speaker mode or a video call mode to execute the call function.

According to an embodiment, the method for performing the call function in the electronic device may further include displaying the first user interface on the one region of the flexible display, in the state where the call function is executed in the speaker mode or the video call mode, retracting the flexible display in the second direction using the driving unit, when the swipe touch input corresponding to the second direction is detected on the first user interface, and switching the call mode of the electronic device to a receiver mode to execute the call function.

According to an embodiment, the method for performing the call function in the electronic device may further include further displaying a second user interface associated with a call on the at least one area of the flexible display and ending the call function which is being executed, when the swipe touch input corresponding to the second direction is detected on the second user interface.

According to an embodiment, the method for performing the call function in the electronic device may further include further displaying a second user interface associated with a call on the at least one area of the flexible display and ending the call function which is being executed, when a swipe touch input corresponding to the first direction is detected on the second user interface and executing a function for transmitting a message.

According to an embodiment, the function for transmitting the message may operate in a mode preset by a user, and the mode may include at least one of an SMS execution mode, an MMS execution mode, or an instant message service execution mode.

## Claims

1. An electronic device (601), comprising:
a housing (620);
a flexible display (660) configured to extend in a first direction (603A, 603B) from the housing (620) and configured to retract in a second direction (607A, 607B) being a direction opposite to the first direction (603A, 603B);
a driving unit (310) connected with the flexible display (660);
at least one sensor;
a processor (120); and
a memory (130) operatively connected with the processor (120),
wherein the memory (130) stores one or more instructions causing the processor (120) to:
identify (1010) a shape of the flexible display (660) using the at least one sensor, in response to executing a call reception function or a call transmission function;
display (1020) a first user interface (611A, 611B) associated with a call function which is being executed on at least one area of the flexible display (660) and a second user interface (613A, 613B) associated with end of the call function on the at least one area of the flexible display (660), when (1015) identifying the shape of the flexible display (660) as an expanded mode; and
**characterized in that** the memory further stores one or more instructions causing the processor (120) to:
end the call function which is being executed and execute a function for transmitting a message, when a swipe touch input corresponding to the first direction (603A, 603B) is detected on the second user interface (613A, 613B).

2. The electronic device (601) of claim 1, wherein the one or more instructions, which executed, cause the processor (120) to:
set a call mode of the electronic device (601) to a receiver mode to execute the call function, when the flexible display (660) retracts in the second direction (607A, 607B).

3. The electronic device (601) of claim 2, wherein the one or more instructions, which executed, cause the processor (120) to:
display the first user interface (611A, 611B) on the one region of the flexible display (660), in the state where the call function is executed in the receiver mode; and
extend the flexible display (660) in the first direction (603A, 603B) using the driving unit (310), when a swipe touch input corresponding to the first direction (603A, 603B) is detected on the first user interface (611A, 611B).

4. The electronic device (601) of claim 3, wherein the first user interface (611A, 611B) determines a call mode set to switch when the swipe touch input corresponding to the first direction (603A, 603B) is detected as one of a speaker mode or a video call mode, in response to a single touch input.

5. The electronic device (601) of claim 4, wherein the one or more instructions, which executed, cause the processor (120) to:
switch the call mode of the electronic device (601) to a call mode determined based on the single touch input to execute the call function, when the flexible display (660) extends in the first direction (603A, 603B).

6. The electronic device (601) of any one of the preceding claims, wherein the one or more instructions, which executed, cause the processor (120) to:
maintain the shape of the flexible display (660) as the expanded mode, when a swipe touch input corresponding to the first direction (603A, 603B) is detected on the first user interface (611A, 611B), and set a call mode of the electronic device (601) to a speaker mode or a video call mode to execute the call function.

7. The electronic device (601) of claim 6, wherein the one or more instructions, which executed, cause the processor (120) to:
display the first user interface (611A, 611B) on the one region of the flexible display (660), in the state where the call function is executed in the speaker mode or the video call mode;
retract the flexible display (660) in the second direction (607A, 607B) using the driving unit (310), when the swipe touch input corresponding to the second direction (607A, 607B) is detected on the first user interface (611A, 611B); and
switch the call mode of the electronic device (601) to a receiver mode to execute the call function.

8. The electronic device (601) of any one of the preceding claims, wherein the one or more instructions, which executed, cause the processor (120) to:
end the call function which is being executed, when a swipe touch input corresponding to the second direction (607A, 607B) is detected on the second user interface (613A, 613B).

9. The electronic device (601) of claim 1, wherein the function for transmitting the message operates in a mode preset by a user, and
wherein the mode includes at least one of a short message service, SMS, execution mode, a multimedia message service, MMS, execution mode, or an instant message service execution mode.

10. A method for performing a call function in an electronic device (601), the method comprising:
identifying (1010) a shape of a flexible display (660) using at least one sensor, in response to executing a call reception function or a call transmission function;
displaying (1020) a first user interface (611A, 611B) associated with a call on at least one area of the flexible display (660) and a second user interface (613A, 613B) associated with end of the call function on the at least one area of the flexible display (660), when (1015) identifying the shape of the flexible display (660) as an expanded mode;
**characterized in that** the method further comprises:
ending the call function which is being executed and executing a function for transmitting a message, when a swipe touch input corresponding to the first direction (603A, 603B) is detected on the second user interface (613A, 613B).

11. The method of claim 10, further comprising:
setting a call mode of the electronic device (601) to a receiver mode to execute the call function, when the flexible display (660) retracts in the second direction (607A, 607B).

12. The method of claim 11, further comprising:
displaying the first user interface (611A, 611B) on the one region of the flexible display (660), in the state where the call function is executed in the receiver mode; and
extending the flexible display (660) in the first direction (603A, 603B) using the driving unit (310), when a swipe touch input corresponding to the first direction (603A, 603B) is detected on the first user interface (611A, 611B).

13. The method of claim 12, wherein the first user interface (611A, 611B) determines a call mode set to switch when the swipe touch input corresponding to the first direction (603A, 603B) is detected as one of a speaker mode or a video call mode, in response to a single touch input.

14. The method of claim 13, wherein the extending of the flexible display (660) in the first direction (603A, 603B) using the driving unit (310), when the swipe touch input corresponding to the first direction (603A, 603B) is detected on the first user interface (611A, 611B), further includes: switching the call mode of the electronic device (601) to a call mode determined based on the single touch input.

## Patentansprüche

1. Elektronische Vorrichtung (601), umfassend:
ein Gehäuse (620);
eine flexible Anzeige (660), die so konfiguriert ist, dass sie sich in einer ersten Richtung (603A, 603B) aus dem Gehäuse (620) heraus erstreckt, und die so konfiguriert ist, dass sie sich in eine zweite Richtung (607A, 607B), die der ersten Richtung (603A, 603B) entgegengesetzt ist, zurückzieht;
eine mit der flexiblen Anzeige (660) verbundene Antriebseinheit (310);
mindestens einen Sensor;
einen Prozessor (120); und
einen Speicher (130), der betriebsfähig mit dem Prozessor (120) verbunden ist,
wobei der Speicher (130) eine oder mehrere Anweisungen speichert, die den Prozessor (120) veranlassen zum:
Identifizieren (1010) der Form der flexiblen Anzeige (660) unter Verwendung des mindestens einen Sensors als Reaktion auf die Ausführung einer Anrufempfangsfunktion oder einer Anrufübertragungsfunktion;
Anzeigen (1020) einer ersten Benutzerschnittstelle (611A, 611B), die einer auf mindestens einem Bereich der flexiblen Anzeige (660) gerade ausgeführten Anruffunktion zugeordnet ist, und einer zweiten Benutzerschnittstelle (613A, 613B), die der Beendigung der Anruffunktion auf dem mindestens einen Bereich der flexiblen Anzeige (660) zugeordnet ist, wenn (1015) die Form der flexiblen Anzeige (660) als erweiterter Modus identifiziert wird; und
**dadurch gekennzeichnet, dass** der Speicher ferner eine oder mehrere Anweisungen speichert, die den Prozessor (120) veranlassen zum:
Beenden der gerade ausgeführten Anruffunktion und Ausführen einer Funktion zum Übertragen einer Nachricht, wenn auf der zweiten Benutzerschnittstelle (613A, 613B) eine Wischberührungseingabe, die der ersten Richtung (603A, 603B) entspricht, erkannt wird.

2. Elektronische Vorrichtung (601) nach Anspruch 1, wobei die eine oder mehreren Anweisungen, die ausgeführt werden, den Prozessor (120) veranlassen zum:
Einstellen eines Anrufmodus der elektronischen Vorrichtung (601) auf einen Empfängermodus, um die Anruffunktion auszuführen, wenn sich die flexible Anzeige (660) in die zweite Richtung (607A, 607B) zurückzieht.

3. Elektronische Vorrichtung (601) nach Anspruch 2, wobei die eine oder mehreren Anweisungen, die ausgeführt werden, den Prozessor (120) veranlassen zum:
Anzeigen der ersten Benutzerschnittstelle (611A, 611B) in dem einen Bereich der flexiblen Anzeige (660) in dem Zustand, in dem die Anruffunktion im Empfängermodus ausgeführt wird; und
Erweitern der flexiblen Anzeige (660) mithilfe der Antriebseinheit (310) in die erste Richtung (603A, 603B), wenn auf der ersten Benutzerschnittstelle (611A, 611B) eine Wischberührungseingabe erkannt wird, die der ersten Richtung (603A, 603B) entspricht.

4. Elektronische Vorrichtung (601) nach Anspruch 3, wobei die erste Benutzerschnittstelle (611A, 611B) einen Anrufmodus bestimmt, der so eingestellt ist, dass er wechselt, wenn die der ersten Richtung (603A, 603B) entsprechende Wischberührungseingabe als einer von einem Lautsprechermodus oder einem Videoanrufmodus erkannt wird, als Reaktion auf eine einzelne Berührungseingabe.

5. Elektronische Vorrichtung (601) nach Anspruch 4, wobei die eine oder mehreren Anweisungen, die ausgeführt werden, den Prozessor (120) veranlassen zum:
Wechseln des Anrufmodus der elektronischen Vorrichtung (601) in einen Anrufmodus, der basierend auf der einzelnen Berührungseingabe bestimmt wird, um die Anruffunktion auszuführen, wenn sich die flexible Anzeige (660) in die erste Richtung (603A, 603B) erstreckt.

6. Elektronische Vorrichtung (601) nach einem der vorhergehenden Ansprüche, wobei die eine oder mehreren Anweisungen, die ausgeführt werden, den Prozessor (120) veranlassen zum:
Beibehalten der Form der flexiblen Anzeige (660) als der erweiterte Modus, wenn eine Wischberührungsgeste, die der ersten Richtung (603A, 603B) entspricht, auf der ersten Benutzerschnittstelle (611A, 611B) erkannt wird, und Einstellen eines Anrufmodus der elektronischen Vorrichtung (601) auf einen Lautsprechermodus oder einen Videoanrufmodus, um die Anruffunktion auszuführen.

7. Elektronische Vorrichtung (601) nach Anspruch 6, wobei die eine oder mehreren Anweisungen, die ausgeführt werden, den Prozessor (120) veranlassen zum:
Anzeigen der ersten Benutzerschnittstelle (611A, 611B) in dem einen Bereich der flexiblen Anzeige (660) in dem Zustand, in dem die Anruffunktion im Lautsprechermodus oder im Videoanrufmodus ausgeführt wird;
Zurückziehen der flexiblen Anzeige (660) mithilfe der Antriebseinheit (310) in die zweite Richtung (607A, 607B), wenn auf der ersten Benutzerschnittstelle (611A, 611B) eine Wischberührungseingabe erkannt wird, die der zweiten Richtung (607A, 607B) entspricht; und
Wechseln des Anrufmodus der elektronischen Vorrichtung (601) in einen Empfängermodus, um die Anruffunktion auszuführen.

8. Elektronische Vorrichtung (601) nach einem der vorhergehenden Ansprüche, wobei die eine oder mehreren Anweisungen, die ausgeführt werden, den Prozessor (120) veranlassen zum:
Beenden der gerade ausgeführten Anruffunktion, wenn auf der zweiten Benutzerschnittstelle (613A, 613B) eine Wischberührungseingabe, die der zweiten Richtung (607A, 607B) entspricht, erkannt wird.

9. Elektronische Vorrichtung (601) nach Anspruch 1, wobei die Funktion zum Übertragen der Nachricht in einem vom Benutzer voreingestellten Modus arbeitet, und
wobei der Modus mindestens einen von einem Ausführungsmodus für den Kurznachrichtendienst, SMS, einem Ausführungsmodus für den Multimedia-Nachrichtendienst, MMS, oder einem Ausführungsmodus für den Sofortnachrichtendienst umfasst.

10. Verfahren zum Ausführen einer Anruffunktion in einer elektronischen Vorrichtung (601), wobei das Verfahren Folgendes umfasst:
Identifizieren (1010) der Form einer flexiblen Anzeige (660) unter Verwendung mindestens eines Sensors als Reaktion auf die Ausführung einer Anrufempfangsfunktion oder einer Anrufübertragungsfunktion;
Anzeigen (1020) einer ersten Benutzerschnittstelle (611A, 611B), die einem Anruf auf mindestens einem Bereich der flexiblen Anzeige (660) zugeordnet ist, und einer zweiten Benutzerschnittstelle (613A, 613B), die der Beendigung der Anruffunktion auf dem mindestens einen Bereich der flexiblen Anzeige (660) zugeordnet ist, wenn (1015) die Form der flexiblen Anzeige (660) als erweiterter Modus identifiziert wird;
**dadurch gekennzeichnet, dass** das Verfahren ferner Folgendes umfasst:
Beenden der gerade ausgeführten Anruffunktion und Ausführen einer Funktion zum Übertragen einer Nachricht, wenn auf der zweiten Benutzerschnittstelle (613A, 613B) eine Wischberührungseingabe, die der ersten Richtung (603A, 603B) entspricht, erkannt wird.

11. Verfahren nach Anspruch 10, ferner umfassend:
Einstellen eines Anrufmodus der elektronischen Vorrichtung (601) auf einen Empfängermodus, um die Anruffunktion auszuführen, wenn sich die flexible Anzeige (660) in die zweite Richtung (607A, 607B) zurückzieht.

12. Verfahren nach Anspruch 11, ferner umfassend:
Anzeigen der ersten Benutzerschnittstelle (611A, 611B) in dem einen Bereich der flexiblen Anzeige (660) in dem Zustand, in dem die Anruffunktion im Empfängermodus ausgeführt wird; und
Erweitern der flexiblen Anzeige (660) mithilfe der Antriebseinheit (310) in die erste Richtung (603A, 603B), wenn auf der ersten Benutzerschnittstelle (611A, 611B) eine Wischberührungseingabe erkannt wird, die der ersten Richtung (603A, 603B) entspricht.

13. Verfahren nach Anspruch 12, wobei die erste Benutzerschnittstelle (611A, 611B) einen Anrufmodus bestimmt, der so eingestellt ist, dass er wechselt, wenn die der ersten Richtung (603A, 603B) entsprechende Wischberührungseingabe als einer von einem Lautsprechermodus oder einem Videoanrufmodus erkannt wird, als Reaktion auf eine einzelne Berührungseingabe.

14. Verfahren nach Anspruch 13, wobei Erweitern der flexiblen Anzeige (660) mithilfe der Antriebseinheit (310) in die erste Richtung (603A, 603B), wenn auf der ersten Benutzerschnittstelle (611A, 611B) eine Wischberührungseingabe erkannt wird, die der ersten Richtung (603A, 603B) entspricht, ferner umfasst:
Wechseln des Anrufmodus der elektronischen Vorrichtung (601) in einen Anrufmodus, der basierend auf der einzelnen Berührungseingabe bestimmt wird.

## Revendications

1. Dispositif électronique (601), comprenant :
un boîtier (620) ;
un affichage flexible (660) configuré pour s'étendre dans une première direction (603A, 603B) à partir du boîtier (620) et configuré pour se rétracter dans une deuxième direction (607A, 607B) qui est une direction opposée à la première direction (603A, 603B) ;
une unité d'entraînement (310) reliée à l'affichage flexible (660) ;
au moins un capteur ;
un processeur (120) ; et
une mémoire (130) connectée de manière opérationnelle au processeur (120),
dans lequel la mémoire (130) stocke une ou plusieurs instructions qui amènent le processeur (120) à :
identifier (1010) une forme de l'affichage flexible (660) à l'aide de l'au moins un capteur, en réponse à l'exécution d'une fonction de réception d'appel ou d'une fonction de transmission d'appel ;
afficher (1020) une première interface utilisateur (611A, 611B) associée à une fonction d'appel en cours d'exécution sur au moins une zone de l'affichage flexible (660) et une deuxième interface utilisateur (613A, 613B) associée à la fin de la fonction d'appel sur l'au moins une zone d'affichage flexible (660), lorsque (1015) l'on identifie la forme de l'affichage flexible (660) comme étant un mode étendu ; et
**caractérisé en ce que** la mémoire stocke en outre une ou plusieurs instructions qui amènent le processeur (120) à :
mettre fin à la fonction d'appel en cours d'exécution et exécuter une fonction permettant d'envoyer un message, lorsqu'une entrée tactile par glissement correspondant à la première direction (603A, 603B) est détectée sur la deuxième interface utilisateur (613A, 613B).

2. Dispositif électronique (601) de la revendication 1, dans lequel l'une ou les plusieurs instructions, qui sont exécutées, amènent le processeur (120) à :
régler le mode d'appel du dispositif électronique (601) en mode récepteur afin d'exécuter la fonction d'appel, lorsque l'affichage flexible (660) se rétracte dans la deuxième direction (607A, 607B).

3. Dispositif électronique (601) de la revendication 2, dans lequel l'une ou les plusieurs instructions, qui sont exécutées, amènent le processeur (120) à :
afficher la première interface utilisateur (611A, 611B) sur l'une zone de l'affichage flexible (660) dans un état où la fonction d'appel est exécutée en mode récepteur ; et
étendre l'affichage flexible (660) dans la première direction (603A, 603B) à l'aide de l'unité d'entraînement (310), lorsqu'une entrée tactile par glissement correspondant à la première direction (603A, 603B) est détectée sur la première interface utilisateur (611A, 611B).

4. Dispositif électronique (601) de la revendication 3, dans lequel la première interface utilisateur (611A, 611B) détermine un mode d'appel à activer lorsque l'entrée tactile par glissement correspondant à la première direction (603A, 603B) est détectée comme étant un d'un mode haut-parleur ou d'un mode d'appel vidéo, en réponse à une seule entrée tactile.

5. Dispositif électronique (601) de la revendication 4, dans lequel l'une ou les plusieurs instructions, qui sont exécutées, amènent le processeur (120) à :
changer le mode d'appel du dispositif électronique (601) vers un mode d'appel déterminé en se basant sur la seule entrée tactile afin d'exécuter la fonction d'appel, lorsque l'affichage flexible (660) s'étend dans la première direction (603A, 603B).

6. Dispositif électronique (601) de l'une quelconque des revendications précédentes, dans lequel l'une ou les plusieurs instructions, qui sont exécutées, amènent le processeur (120) à :
maintenir la forme de l'affichage flexible (660) en mode étendu, lorsqu'une entrée tactile par glissement correspondant à la première direction (603A, 603B) est détectée sur la première interface utilisateur (611A, 611B), et de régler un mode d'appel du dispositif électronique (601) sur un mode haut-parleur ou un mode d'appel vidéo pour exécuter la fonction d'appel.

7. Dispositif électronique (601) de la revendication 6, dans lequel l'une ou les plusieurs instructions, qui sont exécutées, amènent le processeur (120) à :
afficher la première interface utilisateur (611A, 611B) sur l'une zone de l'affichage flexible (660) dans un état où la fonction d'appel est exécutée en mode haut-parleur ou en mode d'appel vidéo ;
rétracter l'affichage flexible (660) dans la seconde direction (607A, 607B) à l'aide de l'unité d'entraînement (310), lorsque l'entrée tactile par glissement correspondant à la seconde direction (607A, 607B) est détectée sur la première interface utilisateur (611A, 611B) ; et
changer le mode d'appel du dispositif électronique (601) en mode récepteur afin d'exécuter la fonction d'appel.

8. Dispositif électronique (601) de l'une quelconque des revendications précédentes, dans lequel l'une ou les plusieurs instructions, qui sont exécutées, amènent le processeur (120) à :
mettre fin à la fonction d'appel en cours d'exécution, lorsqu'une entrée tactile par glissement correspondant à la seconde direction (607A, 607B) est détectée sur la deuxième interface utilisateur (613A, 613B).

9. Dispositif électronique (601) de la revendication 1, dans lequel la fonction de transmission du message fonctionne dans un mode prédéfini par un utilisateur, et
dans lequel le mode comprend au moins l'un d'un mode d'exécution de service de messages courts, SMS, d'un mode d'exécution de service de messages multimédias, MMS, ou d'un mode d'exécution de service de messagerie instantanée.

10. Procédé pour exécuter une fonction d'appel dans un dispositif électronique (601), le procédé comprenant :
identifier (1010) une forme d'un affichage flexible (660) à l'aide d'au moins un capteur, en réponse à l'exécution d'une fonction de réception d'appel ou d'une fonction de transmission d'appel ;
afficher (1020) une première interface utilisateur (611A, 611B) associée à un appel sur au moins une zone de l'affichage flexible (660) et une deuxième interface utilisateur (613A, 613B) associée à la fin de la fonction d'appel sur l'au moins une zone d'affichage flexible (660), lorsque (1015) l'on identifie la forme de l'affichage flexible (660) comme étant un mode étendu ;
**caractérisé en ce que** le procédé comprend en outre :
mettre fin à la fonction d'appel en cours d'exécution et exécuter une fonction permettant d'envoyer un message, lorsqu'une entrée tactile par glissement correspondant à la première direction (603A, 603B) est détectée sur la deuxième interface utilisateur (613A, 613B).

11. Procédé de la revendication 10, comprenant en outre :
régler le mode d'appel du dispositif électronique (601) en mode récepteur afin d'exécuter la fonction d'appel, lorsque l'affichage flexible (660) se rétracte dans la deuxième direction (607A, 607B).

12. Procédé de la revendication 11, comprenant en outre :
afficher la première interface utilisateur (611A, 611B) sur l'une zone de l'affichage flexible (660) dans un état où la fonction d'appel est exécutée en mode récepteur ; et
étendre l'affichage flexible (660) dans la première direction (603A, 603B) à l'aide de l'unité d'entraînement (310), lorsqu'une entrée tactile par glissement correspondant à la première direction (603A, 603B) est détectée sur la première interface utilisateur (611A, 611B).

13. Procédé de la revendication 12, dans lequel la première interface utilisateur (611A, 611B) détermine un mode d'appel à activer lorsque l'entrée tactile par glissement correspondant à la première direction (603A, 603B) est détectée comme étant un d'un mode haut-parleur ou d'un mode d'appel vidéo, en réponse à une seule entrée tactile.

14. Procédé de la revendication 13, dans lequel l'extension de l'affichage flexible (660) dans la première direction (603A, 603B) à l'aide de l'unité d'entraînement (310), lorsqu'une entrée tactile par glissement correspondant à la première direction (603A, 603B) est détectée sur la première interface utilisateur (611A, 611B), comprend en outre :
changer le mode d'appel du dispositif électronique (601) vers un mode d'appel déterminé en se basant sur la seule entrée tactile.
